# EUROPÄISCHE PATENTSCHRIFT

(11) **EP 4 201 188 B1**
(45) Veröffentlichungstag und Bekanntmachung des Hinweises auf die Patenterteilung: **29.10.2025**
(21) Anmeldenummer: 22194322.8
(22) Anmeldetag: 07.09.2022
(51) Int. Cl.: A01D 34/82, A01D 75/20

(54) **LANDWIRTSCHAFTLICHES ANBAUGERÄT**
AGRICULTURAL CULTIVATION DEVICE
APPAREIL AGRICOLE

(30) Priorität: 23.12.2021 DE 102021134489
(43) Veröffentlichungstag der Anmeldung: 28.06.2023
(73) Patentinhaber: Pöttinger Landtechnik GmbH, 4710 Grieskirchen (AT)
(72) Erfinder: BAUMGARTNER, Martin, 4710 Grieskirchen (AT)
(74) Vertreter: Thoma, Michael

(56) Entgegenhaltungen:
- EP-A1- 3 501 257
- EP-A1- 3 741 199
- EP-A1- 3 804 493
- DE-T2- 602005 002 967
- US-B2- 8 020 364

## Beschreibung

Die vorliegende Erfindung betrifft ein landwirtschaftliches Anbaugerät insbesondere in Form einer Mähmaschine, mit einer Anbauvorrichtung zum Anbauen an einen Schlepper, zumindest einem Arbeitsaggregat sowie einer Schutzvorrichtung, die eine das zumindest eine Arbeitsaggregat aufrecht umgebende Prallfläche, insbesondere Schutztuch, umfasst.

Bei landwirtschaftlichen Arbeitsgeräten werden die oft rotierend betriebenen Arbeitsaggregate mit einer Schutz- und/oder Abdeckvorrichtung abgedeckt, um einerseits von den Arbeitsaggregaten weggeschleuderte Steine, Brocken oder andere Objekte an einem weiteren Davonfliegen zu hintern und andererseits Tiere oder gar Personen vor Verletzungen zu schützen. Insbesondere bei Mähwerken geht von den rotierenden Schneidtrommeln Gefahr aus, da einerseits auf die Messer treffende Steine davongeschleudert werden und andererseits durch die umfangsseitig vorstehenden, scharfen Messer hohe Verletzungsgefahr besteht.

Um das Wegschleudern von Steinen und dergleichen unterbinden zu können, umfassen solche Schutzvorrichtungen häufig größere Prallflächen in Form eines Pralltuchs oder eines sehr engmaschigen Prallschutzgitters bzw. -netz, welches davonfliegende Steine und Teilchen einfangen kann. Die Prallfläche erstreckt sich dabei üblicherweise aufrecht vom Boden bis etwa zu einem oberen Ende der Arbeitsaggregate bzw. deren Aufhängung an einem Maschinenrahmen, wobei sich die Prallfläche insbesondere zumindest entlang einer Frontseite erstrecken und gemeinsam alle nebeneinander angeordneten Arbeitsaggregate abdecken kann. Oft erstreckt sich die Prallfläche auch an den Seiten rechts und links der äußersten Arbeitsaggregate ebenfalls in einer aufrechten Ebene, wobei unabhängig hiervon die Prallfläche auch einen liegenden Abschnitt oberhalb der Arbeitsaggregate aufweisen kann. Beispielsweise zeigt die Schrift DE 20 2017 006 567 U1 eine Mähmaschine mit einem Schutztuch, das sich aufrecht vor den rotierenden Mähtrommeln sowie rechts und links seitlich hiervon erstreckt. Um Ein- oder Ausbauchungen des Schutztuchs zu vermeiden, wird das Schutztuch über federgespannte Zugbügel straff gespannt. Eine ähnliche Schutztuchanordnung um die Mähtrommel eines Mähwerks herum zeigt die Schrift EP 25 29 612 A1.

Die Schrift EP 3 741 199 A1 offenbart ein landwirtschaftliches Anbaugerät 1, insbesondere Mähmaschine, mit einer Anbauvorrichtung zum Anbauen an einen Schlepper, zumindest einem Arbeitsaggregat sowie einer Schutzvorrichtung 7, die eine an das Arbeitsaggregat aufrecht umgebene Prallfläche 8, insbesondere in Form eines Schutztuchs, aufweist, wobei die Schutzvorrichtung 7 relativ zum Arbeitsaggregat 5 in liegender Richtung mittels Schwenkhebeln 14 verschiebbar gelagert ist.

Einerseits soll sich die Prallfläche in Form des genannten Schutztuchs relativ nahe bei den Arbeitsaggregaten erstrecken, um unnötige Baugröße zu vermeiden, aber auch um wegfliegende Steine bzw. Teilchen rasch einzufangen und diesen keinen größeren Streubereich zu geben. Andererseits ist es jedoch schwierig, die Werkzeuge der Arbeitsaggregate auszutauschen bzw. die Arbeitsaggregate in anderer Weise zu warten, wenn die Schutzvorrichtung mit ihrer Prallfläche den Zugang zu den Arbeitsaggregaten verhindert oder zumindest beeinträchtigt. Beispielsweise sind die Schneidwerkzeuge von Mähwerken regelmäßig nachzuschleifen bzw. auszutauschen, da sie ständigem Verschleiß unterliegen. Dies ist jedoch nicht ganz einfach, wenn die recht nahe am Schutztuch liegenden Schneidmesser schwer zugänglich sind.

Es wurde insofern bereits angedacht, die Schutzvorrichtung wegschwenkbar zu lagern, sodass das Pralltuch nach oben weggeschwenkt werden kann, wenn zum Zwecke der Wartung oder Reparatur die Arbeitsaggregate zugänglich gemacht werden sollen. Dabei ist es oft jedoch nicht möglich, das Pralltuch weit genug nach oben wegzuschwenken, da die Anbauvorrichtung über den Arbeitsaggregaten oft Aufhängungselemente wie Lenker, Entlastungsfedern oder Wippeinrichtungen umfasst, um Pendel-, Tauch- oder Nickbewegungen der Arbeitsaggregate zum Zwecke der Bodenanpassung zu ermöglichen. Beispielsweise zeigt die Schrift EP 15 93 294 B1 eine solche Anbauvorrichtung mit einem flexiblen Aufhängungsmechanismus für ein Mähwerk, dessen gelenkig miteinander verbundene Aufhängungslenker sich gegenläufig erstrecken und den Raum oberhalb des Mähwerks bis über dessen Vorderseite hinaus einnehmen, sodass ein frontseitig angebrachtes Prall- bzw. Schutztuch nur begrenzt nach oben schwenkbar ist und recht schnell mit der Lenkeraufhängung kollidiert.

Ferner ist aus der EP 21 16 124 B1 eine Mähmaschine bekannt, deren Schutzvorrichtung ein oben liegendes Deckenteil sowie ein von dessen Frontseite herabhängendes Frontteil aufweist. Um für die Montage bzw. Reparatur der Schneidtrommeln einen besseren Zugang zu geben, ist der oben liegende Deckenteil an seinem vorderen Ende mittels Lagerzapfen in einer kulissenartigen Führungsnut verschieblich geführt und an seinem hinteren Ende an einem Stellhebel angelenkt, der bei Betätigung den hinteren Rand des oben liegenden Deckenteils ein Stück weit anhebt und das oben liegende Deckenteil insgesamt zurückzieht, wobei der vordere Ende des Deckenteils in der genannten Führungsnut gleitet. Der frontseitig herabhängende Frontteil ist aus gummielastischen Material biegsam ausgebildet und kann händisch auf die Oberseite gelegt werden, um von der Vorderseite her die Messertrommeln freizugeben. Die Stellbewegung ist jedoch insgesamt mühsam und schwergängig. Zum einen neigt die Schutzwand in der kulissenartigen Führungsnut zum Verklemmen, wenn die Stellbewegungen rechts und links nicht exakt synchron ausgeführt werden. Zum anderen muss das gummielastische Pralltuch eigens nach oben geklappt werden, um tatsächlich großräumigen Zugang zu den Messertrommeln zu haben.

Der vorliegenden Erfindung liegt die Aufgabe zugrunde, ein verbessertes landwirtschaftliches Anbaugerät der genannten Art zu schaffen, das Nachteile des Standes der Technik vermeidet und letzteren in vorteilhafter Weise weiterbildet. Insbesondere soll die Schutzvorrichtung durch eine ausreichend große, in der Betriebsstellung nahe bei den Arbeitsaggregaten positionierte Prallfläche für hohe Sicherheit sorgen, andererseits jedoch einen großräumigen Zugang zu den Arbeitsaggregaten zum Zwecke der Wartung und Reparatur ermöglichen und eine leichtgängige Verstellung in einem Zug auch unter nach oben beengten Platzverhältnissen gewährleisten, ohne zum Verklemmen zu neigen.

Erfindungsgemäß wird die genannte Aufgabe durch ein landwirtschaftliches Anbaugerät gemäß Anspruch 1 gelöst. Bevorzugte Ausgestaltungen der Erfindung sind Gegenstand der abhängigen Ansprüche.

Es wird also vorgeschlagen, die Schutzvorrichtung über zwei Lenkeranordnungen am Maschinenrahmen bzw. einer damit verbundenen Trägerstruktur so anzulenken, dass mit einer Verschiebung der Schutzvorrichtung entlang einer vorgegebenen Bahn eine Schwenkbewegung auch des Pralltuchs einhergeht bzw. erzwungen wird, die einen ausreichend großen Zugang zum Arbeitsaggregat schafft. Erfindungsgemäß ist die Schutzvorrichtung mittels einer ersten Lenkeranordnung entlang einer liegenden Bahn verschieblich gelagert, wobei die Schutzvorrichtung an der ersten Lenkeranordnung um eine liegende Schwenkachse schwenkbar gelagert und an einer zweiten Lenkeranordnung angelenkt ist, die die Schutzvorrichtung beim Verschieben entlang der liegenden, von der ersten Lenkeranordnung vorgegebenen Bahn um die liegende Schwenkachse verschwenkt und die Prallfläche aus der aufrechten Arbeitsstellung in eine liegende Montagestellung verdreht.

Durch die beiden Lenkeranordnungen, die die Bewegungen der Schutzvorrichtung zwischen Arbeitsstellung und Montagestellung steuern, kann eine leichtgängige Verstellung erreicht werden, die anders als kulissenartige Schiebeführungen nicht zum Verklemmen neigt. Gleichzeitig kann durch das Ineinandergreifen bzw. Zusammenspiel der Kinematiken der beiden Lenkeranordnungen in einem Zug sowohl eine Schiebebewegung als auch eine Schwenkbewegung erzeugt werden, die das in der Arbeitsstellung aufrecht stehende Pralltuch in eine näherungsweise liegende Montagestellung verbringt, in der ein ausreichend großer Zugang zum Arbeitsaggregat gewährleistet ist. Ein separates, händisches Umklappen des Pralltuchs ist nicht länger nötig, wobei gleichzeitig auch die gestalterische Freiheit für das Pralltuch größer wird, da keine gummielastische Ausbildung des Pralltuchs nötig ist - gleichwohl aber vorgesehen sein kann - , um wie im Stand der Technik ein Nach-oben-Klappen und Weglegen des Tuchs zu gestatten.

In Weiterbildung der Erfindung können die beiden Lenkeranordnungen derart aufeinander abgestimmt sein, dass der von der Schwenkachse beabstandete Abschnitt des Pralltuchs gegenläufig zur Verschiebung entlang der vorgegebenen liegenden Bahn erfolgt bzw. auf die Seite schwenkt, von der die Schwenkachse wegfährt. Betrachtet man die aufrechte Arbeitsstellung als Ausgangsstellung eines beispielsweise an der Frontseite des Arbeitsaggregats angeordneten Pralltuchs, kann ein oberer Endabschnitt des Pralltuchs beispielsweise entlang der liegenden Bahn nach hinten verschoben werden, wobei dann ein in der aufrechten Arbeitsstellung unterer Endabschnitt des Pralltuchs nach vorne/oben verschwenkt wird. Allgemeiner gesprochen kann ein oberer Endabschnitt des Pralltuchs näher zum Arbeitsaggregat hin verschoben werden, wobei sich dann der untere Endabschnitt vom Arbeitsaggregat weg nach oben schwenkt.

Je nach Ausbildung des Arbeitsaggregats kann aber auch eine gegenteiliges Ausbildung vorteilhaft und besonders Platz sparend sein, wobei dann der in der Arbeitsstellung aufrecht stehende Teil der Schutzvorrichtung bzw. die genannte Prallfläche sozusagen unter die Oberseite der Schutzvorrichtung hineingeschwenkt werden kann. Betrachtet man wieder eine in der Arbeitsstellung frontseitig, aufrecht vor dem Arbeitsaggregat vorauslaufende Prallfläche, kann deren unteres Ende auf das Arbeitsaggregat zu und dann zunehmend weiter nach oben in die liegende Montagestellung verschwenkt werden, wenn der obere Teil der Prallfläche entlang der vorgegebenen, liegenden Bahn verschoben wird. Hierbei kann die Verschiebebewegung entlang der liegenden Bahn sowohl auf das Arbeitsaggregat zu als auch vom Arbeitsaggregat weg gerichtet sein.

In vorteilhafter Weiterbildung der Erfindung kann die erste Lenkeranordnung, die die liegende Verschiebebahn für die Schutzvorrichtung vorgibt, zumindest einen ersten Lenker umfassen, der einerseits gelenkig am Maschinenrahmen bzw. einer damit verbundenen Trägerstruktur zum Tragen der Schutzvorrichtung gelagert und andererseits gelenkig mit der Schutzvorrichtung verbunden sein kann und die liegende Bahn zum Verschieben der Schutzvorrichtung in Form eines liegenden Kreisbogenstücks vorgibt. Dabei können vorteilhafterweise auch mehrere parallelgeschaltete erste Lenker vorgesehen sein, die beispielsweise an rechten und linken bzw. allgemein gegenüber liegenden Endabschnitten der Schutzvorrichtung angeordnet und koaxiale Gelenkachsen am Maschinenrahmen bzw. der Trägerstruktur einerseits und koaxiale Gelenkachsen an der Schutzvorrichtung andererseits haben können, wobei die koaxialen Gelenkachsen zur Schutzvorrichtung hin die vorgenannte erste Schwenkachse definieren können, um die die Schutzvorrichtung relativ zur ersten Lenkeranordnung verschwenkbar ist.

Der zumindest eine erste Lenker kann dabei derart ausgebildet und angeordnet sein, dass der Lenker in seinen beiden Endstellungen, die einerseits der Arbeitsstellung der Schutzvorrichtung mit aufrecht stehendem Pralltuch und andererseits der Montagestellung der Schutzvorrichtung mit liegendem Pralltuch entsprechen, gegenüber einer Vertikalen zu gegenüberliegenden Seiten hin spitzwinklig geneigt ist und beim Verstellen zwischen Arbeits- und Montagestellung eine vertikale Mittelstellung überfährt. Ist die Prallfläche heck- oder frontseitig zum Arbeitsaggregat angeordnet, kann sich der besagte zumindest eine erste Lenker in einer Endstellung schräg nach vorne und in der anderen Endstellung schräg nach hinten erstrecken. Ist die Prallfläche seitlich zum Arbeitsaggregat näherungsweise in Fahrtrichtung ausgerichtet, kann sich der besagte zumindest eine erste Lenker in den beiden Endstellungen einerseits schräg nach links und andererseits schräg nach rechts erstrecken.

Bei einer geraden Ausbildung des genannten ersten Lenkers definiert dessen Längsachse selbst die genannten spitzen Neigungswinkel zur Vertikalen. Grundsätzlich kann der Lenker aber auch gekrümmt oder abgeknickt oder in anderer Weise geformt sein, wobei in diesem Fall mit der spitzwinkligen Neigung zu gegenüberliegenden Seiten einer Vertikalen hin die Neigung einer virtuellen Verbindungsgeraden zwischen den beiden Gelenkpunkten des Lenkers gemeint ist.

Durch diese beiden Endstellungen spitzwinklig geneigt zu gegenüberliegenden Seiten einer Vertikalen hin kann das Kreisbogenstück eine insgesamt flache, liegende Bahn definieren, die auch bei beengten Platzverhältnissen nach oben ein kollisionsfreies Verstellen ermöglicht und auch einen Aufstand der Prallfläche am Boden bei der Verstellung zwischen Arbeits- und Montagestellung vermeidet. Beispielsweise bei Mähwerken ist der Platz nach oben oft sehr beengt, da dort für eine Bodenanpassung des Mähwerks mehr oder minder komplizierte Aufhängungs- bzw. Anbaulenker vorgesehen sind, um ein mehrachsiges Pendeln des Mähwerks zu ermöglichen, so dass oberhalb der Schutzvorrichtung kaum Platz ist, um die Schutzvorrichtung aus der Arbeitsstellung in die Montagestellung zu verfahren. Durch die genannte Anordnung der ersten Lenkeranordnung wird eine insgesamt flache Bewegungsbahn für das Verschieben der Schutzvorrichtung vorgegeben, die Platzprobleme weitestgehend vermeidet.

Insbesondere kann der zumindest eine erste Lenker dabei mit seinem unteren Ende am Maschinerahmen bzw. der damit verbundenen Trägerstruktur angelenkt sein und mit seinem oberen Endabschnitt die Schutzvorrichtung gelenkig lagern. Wird die Anordnung in der vorgenannten Weise dabei so getroffen, dass sich der Lenker in den beiden Endstellungen zu gegenüberliegenden Seiten einer Vertikalen hin neigt, wird eine Bewegungsbahn erzielt, die aus der Arbeitsstellung zunächst ein leichtes Anlupfen der Schutzvorrichtung vorsieht und dann zum Ende bzw. auf die Montagestellung zu wieder ein leichtes Absenken vorsieht. Durch das anfängliche Anlupfen der Schutzvorrichtung kann ein Anstehen der Prallfläche, das den angestrebten Schwenkvorgang behindern würde, vermieden werden und zwar auch dann, wenn das Anbaugerät bodennah gehalten bzw. abgestellt ist, so dass das Anbaugerät nicht unbedingt am Schlepper angebaut und ausgehoben werden muss, um das Arbeitsaggregat unter der Schutzvorrichtung inspizieren zu können.

Insbesondere kann die erste Lenkeranordnung derart ausgebildet werden, dass die in Form eines Kreisbogenstücks vorgegebene liegende Bewegungsbahn zu ihren Endabschnitten hin ansteigende bzw. abfallende Steigungsabschnitte und in einem Mittelabschnitt einen horizontalen Bahnabschnitt bzw. einen Bahnabschnitt mit horizontaler Tangente besitzt.

Die Schutzvorrichtung kann grundsätzlich mit verschiedenen Abschnitten an der ersten Lenkeranordnung angelenkt sein, wobei in vorteilhafter Weiterbildung der Erfindung die erste Lenkeranordnung in der oberen Hälfte der Schutzvorrichtung an letzterer angelenkt sein kann, beispielsweise im Bereich eines oben liegenden Deckenabschnitts oder eines oberen Endabschnitts der Schutzvorrichtung. Insbesondere kann die erste Lenkeranordnung mit einem - bei Betrachtung der Arbeitsstellung mit aufrechter Prallfläche - oberen Endabschnitt der Prallfläche und/oder einem Übergangsabschnitt zwischen Prallfläche und oben liegendem Deckenabschnitt und/oder einem oberen Randabschnitt der Schutzvorrichtung benachbart zur genannten Prallfläche gelenkig verbunden sein. Insbesondere kann sich die genannte erste Schwenkachse, um die die Schutzvorrichtung zur ersten Lenkeranordnung verschwenkbar ist, im Bereich eines - bei Betrachtung der Arbeitsstellung - oberen Endabschnitts der Prallfläche liegend angeordnet sein und sich tangential oder näherungsweise parallel zur genannten Prallfläche erstrecken.

Die zweite Lenkeranordnung, die beim Verschieben der Schutzvorrichtung entlang der liegenden Bahn, die die erste Lenkeranordnung vorgibt, die gewünschte Schwenkbewegung der Schutzvorrichtung erzeugt und die Prallfläche zwischen deren aufrechter Arbeitsstellung und deren liegender Montagestellung verkippt, kann in Weiterbildung der Erfindung zumindest einen zweiten Lenker umfassen, der um eine zweite liegende Schwenkachse schwenkbar gelagert und um eine dritte liegende Schwenkachse schwenkbar mit der Schutzvorrichtung verbunden ist, wobei die genannten zweiten und dritten Schwenkachsen zueinander parallel ausgerichtet sein können. Insbesondere können die genannten zweiten und dritten Schwenkachsen parallel zu der ersten Schwenkachse, die die erste Lenkeranordnung definiert, parallel ausgerichtet sein und sowohl voneinander als auch von der ersten Schwenkachse beabstandet angeordnet sein. Durch die Anlenkung des zweiten Lenkers an einem Punkt der Schutzvorrichtung, der von der Anlenkung der ersten Lenkeranordnung beabstandet ist, kann die Schiebebewegung entlang der von der ersten Lenkeranordnung vorgegebenen Bahn in die gewünschte Schwenkbewegung der Schutzvorrichtung umgesetzt werden, die auch die Prallfläche erfasst, die sich in Arbeitsstellung aufrecht vor, hinter oder seitlich vom Arbeitsaggregat erstreckt.

Mit der genannten zweiten Schwenkachse kann der zweite Lenker direkt am Maschinenrahmen oder der damit verbundenen Trägerstruktur für die Schutzvorrichtung gelagert sein, wobei die genannte zweite Schwenkachse ortsfest, d.h. maschinenrahmenfest oder trägerstrukturfest sein kann. Alternativ wäre es aber auch möglich, den genannten zweiten Lenker an einem weiteren verschwenkbaren Lenker anzulenken, beispielsweise nach Art einer Pleuelstange an einer Kurbelwelle.

In Weiterbildung der Erfindung können auch mehrere zweite Lenker parallel geschaltet vorgesehen sein, beispielsweise an rechten und linken oder allgemein gesprochen gegenüberliegenden Endabschnitten der Schutzvorrichtung, um auch bei größeren Breiten der Schutzvorrichtung eine allseits synchronisierte, verbindungsfreie Verstellung zu ermöglichen.

Insbesondere können mehrere zweite Lenker an einer gemeinsamen Betätigungswelle drehfest befestigt sein, die am Maschinenrahmen bzw. der Trägerstruktur schwenkbar gelagert sein kann, um ein synchrones Verschwenken der mehreren zweiten Lenker zu erreichen.

Um auch bei vertikaler Platznot, beispielsweise durch die schon genannten Aufhängungsbauteile für die Bodenanpassung des Arbeitsaggregats, eine ausreichend große und gleichzeitig effiziente Verstellung der Schutzvorrichtung zu erreichen, können die genannten ersten und zweiten Schwenkachsen zumindest näherungsweise auf demselben Höhenniveau angeordnet sein, insbesondere im Bereich einer oben liegenden Decke der Schutzvorrichtung bzw. einem oberen Endabschnitt der Schutzvorrichtung. Grundsätzlich wäre es aber auch möglich, die zweite Schwenkachse, um die der zweite Lenker relativ zum Maschinenrahmen schwenkbar ist, höher oder tiefer als die erste Schwenkachse, um die die Schutzvorrichtung relativ zur ersten Lenkeranordnung schwenken kann, anzuordnen.

Vorteilhafterweise kann auch die dritte Schwenkachse, die den zweiten Lenker mit der Schutzvorrichtung verbindet, zumindest näherungsweise auf dem Höhenniveau der ersten Schwenkachse und/oder der zweiten Schwenkachse liegend angeordnet sein, wenn die Arbeitsstellung der Schutzvorrichtung betrachtet wird. Hierdurch kann einerseits eine Beeinträchtigung oder gar eine Kollision des Arbeitsraums des Arbeitsaggregats in der Arbeitsstellung vermieden werden, während andererseits eine ausreichend große Schwenkbewegung der Schutzvorrichtung beim Verbringen in die Montagestellung erzielt werden kann.

In Weiterbildung der Erfindung kann sich die genannte dritte Schwenkachse in der Arbeitsstellung der Schutzvorrichtung zwischen der ersten Schwenkachse und der zweiten Schwenkachse erstrecken.

Unabhängig hiervon kann sich die zweite Schwenkachse, mit der der zweite Lenker am Maschinenrahmen bzw. der Trägerstruktur angelenkt ist, näher am Arbeitsaggregat bzw. näher an einer Vertikalen durch das Arbeitsaggregat befinden als die erste Schwenkachse, um die die Schutzvorrichtung relativ zur ersten Lenkeranordnung schwenkbar ist. Beispielsweise kann für eine Schutzvorrichtung mit einer frontseitig vor dem Arbeitsaggregat laufenden Prallfläche die erste Schwenkachse weiter vorne und die zweite Schwenkachse weiter hinten angeordnet sein, wobei die zweite Schwenkachse beispielsweise näherungsweise zentral über dem Arbeitsaggregat liegen kann. Für eine Schutzvorrichtung mit heckseitiger Prallfläche kann die erste Schwenkachse weiter hinten und die zweite Schwenkachse relativ dazu weiter vorne angeordnet sein, wobei auch hier die zweite Schwenkachse näherungsweise zentral über dem Arbeitsaggregat liegend angeordnet sein kann.

In Weiterbildung der Erfindung kann sich der zumindest eine zweite Lenker in der Arbeitsstellung liegend erstrecken und zumindest näherungsweise von der zweiten Schwenkachse zur ersten Schwenkachse weisen. Unabhängig hiervon kann sich der zweite Lenker in der Montagestellung der Schutzvorrichtung aufrecht erstrecken bzw. spitzwinklig zur Vertikalen geneigt erstrecken. Ist der zweite Lenker gerade ausgebildet, definiert die Längsachse des zweiten Lenkers die genannte Ausrichtung, während bei gebogenem, gekrümmtem, abgeknicktem oder in anderer Weise ungerade geformten zweiten Lenker eine Verbindungslinie zwischen der zweiten und dritten Schwenkachse die genannte Ausrichtung bestimmt.

In Weiterbildung der Erfindung kann die genannte dritte Schwenkachse, die zwischen dem zumindest einen zweiten Lenker und der Schutzvorrichtung vorgesehen ist, zumindest näherungsweise gleich weit beabstandet von der ersten Schwenkachse und der zweiten Schwenkachse angeordnet sein.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Darstellung eines landwirtschaftlichen Anbaugeräts in Form einer Mähmaschine gemäß einer vorteilhaften Ausführung der Erfindung, wobei die Schutzvorrichtung für die Arbeitsaggregate in Form von Schneidrotoren in der Arbeitsstellung mit einer aufrecht stehenden Prallfläche vor den Arbeitsaggregaten dargestellt ist, und
- Fig. 2:: eine perspektivische Darstellung des Anbaugeräts ähnlich Fig. 1, wobei die Schutzvorrichtung in ihrer aufgeschwenkten Montagestellung gezeigt ist.

Wie die Figuren zeigen, kann das landwirtschaftliche Anbaugerät 1 als Mähmaschine ausgebildet sein und eine Anbauvorrichtung 2 aufweisen, mittels derer das Anbaugerät 1 an einen nicht dargestellten Schlepper angebaut werden kann, der beispielsweise über Ober- und Unterlenker einen Anbaubock des Anbaugeräts 1 tragen kann.

An einem solchen Anbaubock können mittels einer Aufhängungsvorrichtung 4 mehrere Arbeitsaggregate 5 aufgehängt sein, die um aufrechte Achsen rotatorisch antreibbare Arbeitstrommeln aufweisen können. Im Falle einer Mähmaschine können die Arbeitsaggregate 5 um aufrechte Achsen rotatorisch antreibbare Schneidtrommeln oder -teller umfassen, an deren Außenumfang Schneidwerkzeuge wie Klingen angebracht sein können.

Dabei können mehrere Arbeitsaggregate 5 nebeneinander angeordnet und an einem Maschinenrahmen 6 befestigt bzw. montiert oder angelenkt sein, welcher Maschinenrahmen 6 in der genannten Weise durch die Aufhängungsvorrichtung 4 am Anbaubock 3 gelagert ist.

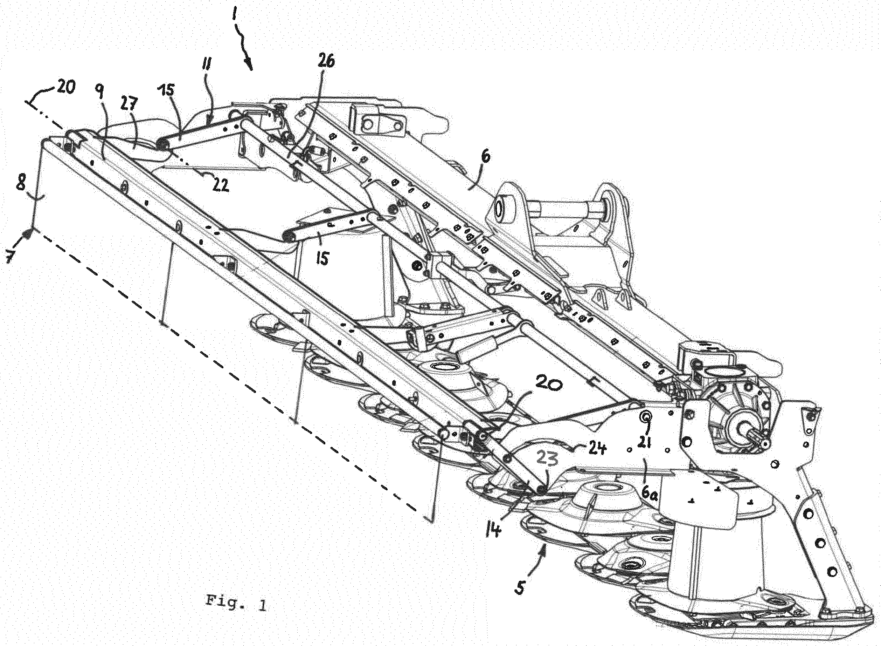

**In** Figur 1 ist ein seitlich auskragendes Mähwerk gezeigt. Insbesondere kann das Anbaugerät 1 aber auch ein frontseitig an einen Schlepper anbaubares Mähwerk umfassen.

Die genannten Arbeitsaggregate 5 werden von einer Schutzvorrichtung 7 abgedeckt, die eine aufrechte Prallfläche 8 in Form eines Prall- bzw. Schutztuchs umfassen kann. Die genannte Prallfläche 8 erstreckt sich dabei je nach Ausbildung als Front- oder Heckmähwerk aufrecht an der Frontseite, das heißt in Fahrtrichtung vor den genannten Arbeitsaggregaten 5, oder aufrecht an der Heckseite, wobei sich die Prallfläche 8 auch seitlich rechts und/oder links aufrecht entlang der Arbeitsaggregate 5 erstrecken kann. Die genannte Schutzvorrichtung 7 kann die Arbeitsaggregate 5 auch an der Oberseite abdecken.

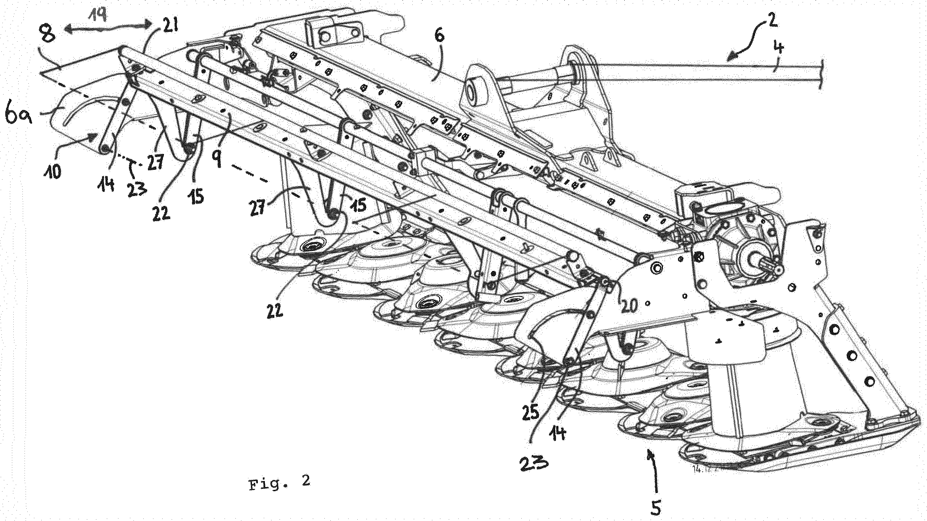

Die genannte Prallfläche 8 in Form eines Pralltuchs oder einer ähnlichen flächigen Komponente kann, wie die Figuren 1 und 2 zeigen, an einem Schutzvorrichtungsträger 9 befestigt sein, der sich in liegender Ausrichtung an einer Seite entlang der Arbeitsaggregate 5 erstrecken kann, insbesondere quer zur Fahrtrichtung entlang der Frontseite oder der Heckseite. Der genannte Schutzvorrichtungsträger 9 kann dabei im Bereich eines oberen Endabschnitts der Arbeitsaggregate 5 und/oder etwa auf Höhe des Maschinenrahmens 6 angeordnet sein und sich liegend quer vor bzw. hinter den Arbeitsaggregaten 5 erstrecken. Die genannte Prallfläche 8 kann sich von dem Schutzvorrichtungsträger 9 aufrecht nach unten bis zum Boden erstrecken, um die Arbeitsaggregate 5 zu schützen bzw. abzudecken und davon wegfliegende Steine und dgl. einzufangen.

Wie Figur 2 zeigt, ist der genannte Schutzvorrichtungsträger 9 in liegender Richtung etwa fahrtrichtungsparallel verschieblich gelagert, um von den Arbeitsaggregaten 5 nach vorne wegbewegt bzw. nach hinten auf die Arbeitsaggregate 5 zubewegt werden zu können.

Dabei ist der Schutzvorrichtungsträger 9 mittels zweiter Lenkerordnungen 10 und 11 so aufgehängt, dass bei der Verschiebung entlang einer näherungsweise fahrtrichtungsparallelen Bahn der Schutzvorrichtungsträger 9 gleichzeitig um seine Längsachse verschwenkt wird und die daran befestigte Prallfläche 8 aus der in Fig1 gezeigten, aufrechten Arbeitsstellung in eine liegende Montagestellung zu verschwenken, die in Fig. 2 gezeigt ist. Die Prallfläche 8 kann hierzu schwenkstabil ausgebildet bzw. schwenkstabil an dem Schutzträger 9 befestigt sein, so dass ein Verdrehen des Schutzträgers 9 die dann davon auskragende Prallfläche 8 nach Art einer Klappe aufschwenken kann. Ist die Prallfläche 8 ein an sich biegeschlaffes Pralltuch oder - netz kann dies durch Federbügel oder andere Versteifungselemente wie Stäbe oder Rippen, die am Schutzvorrichtungsträger 9 befestigt sind, aufgespannt und ausgesteift werden. Alternativ oder zusätzlich kann die Prallfläche selbst aber auch formstabil ausgebildet sein, beispielsweise durch ein entsprechend verstärktes Gewebe oder auch eine in sich steife Plattenausbildung.

Wie die Figuren 1 und 2 zeigen, ist die Schutzvorrichtung 7, genauer gesagt der Schutzvorrichtungsträger 9, mittels einer ersten Lenkeranordnung 10 am Maschinenrahmen 6 bzw. an einer daran angebrachten Trägerstruktur 6a angelenkt, so dass der Schutzvorrichtungsträger 9 entlang einer liegenden Bahn 19, die sich näherungsweise in Fahrtrichtung erstreckt, verschiebbar ist. Die genannte Trägerstruktur 6a kann rechts und links von den Arbeitsaggregaten 5 sich erstreckende, seitliche Trägerkonsolen 6a umfassen, an denen erste Lenker 14 der ersten Lenkeranordnung 10 schwenkbar angelenkt sind. Die genannten ersten Lenker 14 sind dabei um koaxiale vierte Schwenkachsen 23 schwenkbar an der genannten Trägerstruktur 6a gelagert, wobei sich die vierten Schwenkachsen 23 liegend quer zur Fahrtrichtung erstrecken und ortsfest zum Maschinenrahmen 6 sein können.

Insbesondere können die genannten ersten Lenker 14 mit ihren unteren Endabschnitten maschinenrahmenseitig schwenkbar gelagert sein, so dass sie sich aufrecht nach oben zum Schutzvorrichtungsträger 9 hin erstrecken und mit ihren oberen Endabschnitten schwenkbar an den Schutzvorrichtungsträger 9 angelenkt sind, so dass der Schutzvorrichtungsträger 9 und damit die Schutzvorrichtung 7 um eine erste Schwenkachse 20 schwenkbar an dem Lenkerpaar, d.h. den beiden ersten Lenkern 14 gelagert ist. Die genannte erste Schwenkachse 20 erstreckt sich liegend quer zur Fahrtrichtung und/oder parallel zur Längsachse des Schutzvorrichtungsträgers 9 und/oder parallel und/oder tangential zu der Prallfläche 8.

Wie ein Vergleich der Figuren 1 und 2 zeigt, sind die ersten Lenker 14 dabei derart angeordnet, dass sie in ihren beiden Endstellungen, die der Arbeitsstellung einerseits und der Montagestellung der Schutzvorrichtung 7 andererseits entsprechen, jeweils spitzwinklig zur Vertikalen geneigt angeordnet sind, und zwar zu gegenüberliegenden Seiten einer Vertikalen. In einer Endstellung können die genannten ersten Lenker sich schräg nach vorne geneigt erstrecken, während sie sich in der anderen Endstellung schräg geneigt nach hinten erstrecken können. Dabei kann die schräg nach vorne geneigte Stellung die Arbeitsstellung sein und die schräg nach hinten geneigte Stellung die Montagestellung. Grundsätzlich wäre es aber auch möglich, die Zuordnung umgekehrt zu treffen, wenn die Schutzvorrichtung 7 in die Montagestellung nach vorne verschoben und in die Arbeitsstellung nach hinten verschoben werden soll.

Durch die genannten ersten Lenker 14 wird als Bahn 19, entlang derer die Schutzvorrichtung 7 verschoben werden kann, ein liegendes Kurvenstück bzw. ein liegendes Kreisbogenstück vorgegeben. Die Schutzvorrichtung 7 verfährt auf einem Kreisbogen um die vierte Schwenkachse 23, um die die ersten Lenker 14 relativ zum Maschinenrahmen 6 verschwenken.

Da die Anordnung der ersten Lenker 14 so getroffen ist, dass sie beim Verstellen zwischen ihren beiden Endstellungen eine senkrechte bzw. aufrechte Stellung durchlaufen und sie mit ihren unteren Enden maschinenrahmenseitig gelenkig gelagert sind, erhält die kreisbogenförmige Bahn 19 zu den Endabschnitten hin zwei Steigungsabschnitte und im mittleren Abschnitt einen dazu vergleichsweise höherliegenden Bahnabschnitt mit horizontaler Tangente. Dementsprechend wird die Schutzvorrichtung 7 beim anfänglichen Verfahren aus einer der Endstellungen leicht angelupft und zum Ende der Verschiebebewegung hin wieder leicht abgesenkt. Das beschriebene, anfängliche Anlupfen der Schutzvorrichtung 7 hilft dabei, die Prallfläche 8 beim Verschwenken vor Kollisionen zu bewahren, insbesondere wenn die Prallfläche 8 aus der aufrechten Arbeitsstellung verschwenkt wird und sich mit ihrer unteren Kante bodennah erstreckt.

Wie die Figuren 1 und 2 zeigen, können bei der Tragstruktur 6a Endanschläge 24, 25 vorgesehen sein, die die Schwenkbewegung der ersten Lenker 14 begrenzen und die genannten Endstellungen vorgeben können. Die genannten Endanschläge 24, 25 können beispielsweise die Enden eines kreisbogenförmigen Langlochs sein, in dem die Lenker 14 mit einem Anschlagstift laufen können, bis sie das jeweilige Ende erreichen. Dabei können die kreisbogenförmigen Führungsnuten auch genutzt werden, um beispielsweise mit einer durchgängigen Schraubbolzenverbindung gegen Verwindungen abzustützen, so dass etwaige Querkräfte nicht nur im Bereich der Gelenksverbindung, die die vierte Schwenkachse 23 definiert, abgefangen werden, sondern auch mittels des gleichzeitig als Anschlag dienenden Querbolzens.

Um bei der kreisbogenförmigen Verschiebebewegung, die durch die ersten Lenker 14 geführt wird, gleichzeitig ein Verschwenken der Schutzvorrichtung 7 um die genannte erste Schwenkachse 20 - also relativ zu den ersten Lenkern 14 und auch relativ zum Maschinenrahmen 6 - zu erzielen, ist die Schutzvorrichtung 7, genauer gesagt der Schutzvorrichtungsträger 9 durch eine zweite Lenkeranordnung 11 am Maschinenrahmen 6 bzw. der Trägerstruktur 6a angelenkt.

Die zweite Lenkeranordnung 11 umfasst dabei einen oder mehrere zweite Lenker 15, die um eine liegende, parallel zur Prallfläche 8 ausgerichtete und/der sich quer zur Fahrtrichtung erstreckende zweite Schwenkachse 21 ortsfest am Maschinenrahmen 6 bzw. der Trägerstruktur 6a vorgesehen sein kann. Sind mehrere zweite Lenker 15 vorgesehen, können sich diese parallel zueinander erstrecken und/oder entlang der Breite der Schutzvorrichtung 7 verteilt angeordnet sein. Unabhängig hiervon besitzen die mehreren zweiten Lenker 15 vorteilhafterweise koaxiale zweite Schwenkachsen 21, so dass sie koaxial zueinander verschwenken können. Insbesondere können die zweiten Lenker 15 an einer gemeinsamen Betätigungswelle 26 drehfest befestigt sein, so dass durch Verdrehen der Betätigungswelle 26 alle zweiten Lenker 15 synchron zueinander verschwenkt werden können. Die genannte Betätigungswelle 26 kann sich liegend quer zur Fahrtrichtung erstrecken bzw. um die besagte zweite Schwenkachse 21 schwenkbar zum Maschinenrahmen 6 gelagert sein bzw. sich koaxial zu der besagten Schwenkachse 21 erstrecken.

Die zweiten Lenker 15 sind dabei mit ihren von der zweiten Schwenkachse 21 beabstandeten Endabschnitten an der Schutzvorrichtung 7 gelenkig angelenkt, wobei die Gelenke zwischen den zweiten Lenkern 15 und der Schutzvorrichtung 7 eine dritte Schwenkachse 22 definieren, die sich ebenfalls liegend erstrecken und parallel zur Prallfläche 8 ausgerichtet und/oder quer zur Fahrtrichtung ausgerichtet sein kann.

Die genannte dritte Schwenkachse 22 ist dabei von der ersten Schwenkachse 20 des Schutzvorrichtungsträgers 9 beabstandet angeordnet, so dass die Anlenkung der zweiten Lenker 15 bezüglich der ersten Schwenkachse 20 einen Hebelarm hat und den Schutzvorrichtungsträger 9 verdrehen kann.

Wie die Fig. 1 und 2 zeigen, können an dem Schutzvorrichtungsträger 9 Anlenkstreben oder -hebel 27 drehfest befestigt sein und/oder von dem besagten schutzvorrichtungsträger 9 quer zu dessen Längsachse auskragen und mit auskragenden Endabschnitten gelenkig mit den zweiten Lenkern 15 verbunden sein. Wie Fig. 1 zeigt, kann die Anordnung der ersten und zweiten Lenkeranordnungen 11 und 12 derart getroffen sein, dass sich die ersten, zweiten, dritten und vierten Schwenkachsen 20 - 23 parallel zueinander erstrecken, wobei die dritte Schwenkachse 22 zwischen der ersten Schwenkachse 20 und der zweiten Schwenkachse 21 angeordnet sein kann, vgl. Fig. 1 und Fig. 2.

Insbesondere kann sich die genannte dritte Schwenkachse 22 in der Arbeitsstellung der Schutzvorrichtung 7, in der sich die Prallfläche 8 aufrecht erstreckt, näherungsweise mittig zwischen den ersten und zweiten Schwenkachsen 20, 21 angeordnet sein und/oder auf zumindest näherungsweise derselben Höhe wie die ersten und zweiten Schwenkachsen 21 und 22 angeordnet sein. Unabhängig hiervon können zumindest die ersten und zweiten Schwenkachsen 20 und 21 näherungsweise auf demselben Höhenniveau angeordnet sein, um eine kompakte Anordnung mit trotzdem ausreichenden Schwenkbereichen zu erzielen.

Die zweite Lenkeranordnung 11 kann dabei nicht nur die Verdrehung des Schutzvorrichtungsträgers 9 bzw. das damit einhergehende Verschwenken der Prallfläche 8 beim Verschieben des Schutzvorrichtungsträgers 9 entlang der kreisbogenförmigen, liegenden Bahn 19 sicherstellen, sondern kann auch sozusagen als Antriebsvorrichtung genutzt werden. Insbesondere kann der Betätigungswelle 26 ein manuell betätigbarer Stellhebel oder auch ein fremdenergiebetätigbarer Motor beispielsweise in Form eines Elektromotors oder eines Hydraulikmotors zugeordnet sein, um die Betätigungswelle 26 zu verdrehen und hierdurch über ein Verschwenken der zweiten Lenker 15 die Schutzvorrichtung 7 zu verschieben und deren Prallfläche 8 zwischen aufrechter Arbeitsstellung und liegender Montagestellung zu verschwenken.

Grundsätzlich kann die Schutzvorrichtung 7 aber auch ohne solche Antriebsvorrichtungen betätigt werden, beispielsweise durch ein Verschieben des Schutzvorrichtungsträgers 9 per Hand entlang der liegenden Bahn 19, beispielsweise ganz einfach dadurch, dass - gegebenenfalls nach Lösen einer Verriegelung - per Hand gegen den Schutzvorrichtungsträger 9 gedrückt wird oder umgekehrt dieser nach vorne gezogen wird. Die zweite Lenkeranordnung 11 stellt dabei automatisch die beschriebene Schwenkbewegung der Prallfläche 8 sicher.

Wie die Fig. 1 und 2 zeigen, kann die Kinematik der beiden Lenkeranordnungen 10 und 11 dabei derart aufeinander abgestimmt sein, dass die Prallfläche 8 sozusagen gegenläufig zur Verschiebung der Schutzvorrichtung 7 aufschwenkt. Wird der Schutzvorrichtungsträger 9 nach hinten verschoben und/oder auf die Arbeitsaggregate 5 zu verschoben, d.h. aus der Stellung gemäß Fig. 1 in die Stellung gemäß Fig. 2 verbracht, kann die Prallfläche 8 nach vorne und/oder von den Arbeitsaggregaten 5 weg nach oben aufschwenken.

Grundsätzlich wäre aber auch eine umgekehrte Konfiguration denkbar, insbesondere dergestalt, dass bei einer frontseitig vor den Arbeitsaggregaten 5 angeordneten Prallfläche 8 der Schutzvorrichtungsträger 9 verschoben und dabei die Prallfläche 8 auf die Arbeitsaggregate zu verschwenkt und damit sozusagen unter den oben liegenden Deckenteil der Schutzvorrichtung 7 hineingeschwenkt wird. Dies kann mit einer Verschiebebewegung des Schutzvorrichtungsträgers 9 auf die Arbeitsaggregate 5 zu einhergehen, was ganz einfach dadurch erreicht werden kann, dass die zweiten Lenker 15 aus der in Fig. 1 gezeigten Ausgangsstellung nicht nach unten verschwenkt werden, wie dies Fig. 2 zeigt, sondern nach oben verschwenkt werden, wodurch ebenfalls der Schutzvorrichtungsträger 9 sozusagen zu den Arbeitsaggregaten 5 hingezogen, allerdings in die entgegengesetzte Richtung verschwenkt werden würde.

Grundsätzlich wäre es aber auch möglich, die Prallfläche 8 sozusagen gleichlaufend mit der Schiebebewegung zu verschieben, beispielsweise dergestalt, dass bei einem Wegverschieben des Schutzvorrichtungsträgers 9 weg von den Arbeitsaggregaten 5 - also beispielsweise gemäß den Figuren nach vorne - auch die Prallfläche 8 nach vorne von den Arbeitsaggregaten weg aufgeschwenkt wird. Dies könnte beispielsweise dadurch erreicht werden, dass die Prallfläche 8 um 90° versetzt am Schutzvorrichtungsträger 9 angebracht und dessen innere Endstellung gemäß Fig. 2 die Arbeitsstellung ist. Je nachdem, ob die zweiten Lenker 15 dann nach oben oder unten weisen, kann beim Strecken der Lenker die Schwenkbewegung der Prallfläche 8 in die eine oder in die andere Richtung gesteuert werden.

## Patentansprüche

1. Landwirtschaftliches Anbaugerät, insbesondere Mähmaschine, mit einer Anbauvorrichtung (2) zum Anbauen an einen Schlepper, zumindest einem Arbeitsaggregat (5) sowie einer Schutzvorrichtung (7), die eine das Arbeitsaggregat (5) aufrecht umgebende Prallfläche (8), insbesondere in Form eines Schutztuchs, aufweist und die mittels einer ersten Lenkeranordnung (10) entlang einer liegenden Bahn (19) verschieblich gelagert ist, **dadurch gekennzeichnet**, die Schutzvorrichtung (7) an der ersten Lenkeranordnung (10) um eine liegende Schwenkachse (20) schwenkbar gelagert und an einer zweiten Lenkeranordnung (11) angelenkt ist, die die Schutzvorrichtung (7) beim Verschieben entlang der liegenden, von der ersten Lenkeranordnung (10) vorgegebenen Bahn (19) um die liegende Schwenkachse (20) verschwenkt und die Prallfläche (8) aus der aufrechten Arbeitsstellung in eine liegende Montagestellung und umgekehrt verdreht.

2. Landwirtschaftliches Anbaugerät nach dem vorhergehenden Anspruch, wobei eine Verschiebebewegung der Schutzvorrichtung (7) mittels der ersten Lenkeranordnung (10) zum Verschwenken der zweiten Lenkeranordnung (11) nach unten führt, so dass die Prallfläche (8) gegenläufig zur Verschiebebewegung der Schutzvorrichtung (7) verschwenkt wird, nämlich dass bei einem Verschieben der Schutzvorrichtung (7) auf das zumindest eine Arbeitsaggregat (5) zu die Prallfläche (8) vom Arbeitsaggregat (5) weg aufgeschwenkt wird und umgekehrt beim Verschieben der Schutzvorrichtung (7) vom Arbeitsaggregat (5) weg die Prallfläche (8) auf das Arbeitsaggregat (5) zu verschwenkt wird.

3. Landwirtschaftliches Anbaugerät nach Anspruch 1, wobei eine Verschiebebewegung der Schutzvorrichtung (7) mittels der ersten Lenkeranordnung (10) zum Verschwenken der zweiten Lenkeranordnung (11) nach oben führt, so dass die Prallfläche (8) gleichläufig zur Verschiebung der Schutzvorrichtung (7) verschwenkt wird, nämlich dass beim Verschieben der Schutzvorrichtung (7) auf das zumindest eine Arbeitsaggregat (5) zu die Prallfläche (8) ebenfalls auf das Arbeitsaggregat (5) zu verschwenkt wird und umgekehrt beim Verschieben der Schutzvorrichtung (7) vom Arbeitsaggregat (5) weg auch die Prallfläche (8) vom Arbeitsaggregat (5) weg verschwenkt wird.

4. Landwirtschaftliches Anbaugerät nach einem der vorhergehenden Ansprüche, wobei die erste Lenkeranordnung (10) zumindest einen ersten Lenker (14) aufweist, der einerseits gelenkig an einem Maschinenrahmen (6) gelagert ist und andererseits gelenkig mit der Schutzvorrichtung (7) verbunden ist und die liegende Bahn (19) zum Verschieben der Schutzvorrichtung (7) in Form eines liegenden Kreisbogenstücks vorgibt.

5. Landwirtschaftliches Anbaugerät nach dem vorhergehenden Anspruch, wobei der zumindest eine erste Lenker (14) in zwei Endstellungen, die einerseits der Arbeitsstellung der Schutzvorrichtung (7) und andererseits der Montagestellung der Schutzvorrichtung (7) entsprechen, gegenüber einer Vertikalen zu gegenüberliegenden Seiten hin spitzwinklig geneigt ist und in einer Mittelstellung beim Verfahren der Schutzvorrichtung (7) zwischen Arbeits- und Montagestellung vertikal ausgerichtet ist derart, dass die liegende Bahn in Form des Kreisbogenstücks zu den Endstellungen hin ansteigende und abfallende Steigungsabschnitte und einen Mittelabschnitt mit einer horizontalen Tangente aufweist.

6. Landwirtschaftliches Anbaugerät nach dem vorhergehenden Anspruch, wobei der genannte erste Lenker (14) mit einem unteren Ende am Maschinenrahmen (6) angelenkt und mit einem oberen Ende an der Schutzvorrichtung (7) angelenkt ist, so dass die liegende Bahn in Form des Kreisbogenstücks aus der der Arbeitsstellung entsprechenden Endstellung zunächst bis zu dem Mittelabschnitt mit horizontaler Tangente ansteigt und dann zur weiteren, der Montagestellung entsprechenden Endstellung wieder abfällt, so dass die Schutzvorrichtung beim Verbringen aus der Arbeitsstellung in die Montagestellung zunächst ein Stück angehoben und dann wieder ein Stück abgesenkt wird.

7. Landwirtschaftliches Anbaugerät nach einem der vorhergehenden Ansprüche, wobei die liegende Schwenkachse (20), um die die Schutzvorrichtung (7) schwenkbar an der ersten Lenkeranordnung (10) schwenkbar ist, im Bereich eines oberen Endes der in der Arbeitsstellung aufrechten Prallfläche (8) angeordnet ist.

8. Landwirtschaftliches Anbaugerät nach einem der vorhergehenden Ansprüche, wobei die zweite Lenkeranordnung (11) zumindest einen zweiten Lenker (15) aufweist, der um eine zweite liegende Schwenkachse (21) schwenkbar gelagert und um eine dritte liegende Schwenkachse (22) schwenkbar mit der Schutzvorrichtung (7) verbunden ist, wobei die ersten, zweiten und dritten Schwenkachsen (20, 21, 22) zueinander parallel ausgerichtet und voneinander beabstandet angeordnet sind, wobei vorzugsweise der zweite Lenker (15) mit der zweiten Schwenkachse (21) am Maschinenrahmen (6) gelagert ist und die zweite Schwenkachse (21) eine feste Position am Maschinenrahmen (6) besitzt.

9. Landwirtschaftliches Anbaugerät nach dem vorhergehenden Anspruch, wobei die erste Schwenkachse (20) und die zweite Schwenkachse (21) zumindest näherungsweise auf demselben Höhenniveau oberhalb des zumindest einen Arbeitsaggregats (5) angeordnet sind, wobei vorzugsweise die zweite Schwenkachse (21), mit der der zweite Lenker (15) an der Schutzvorrichtung (7) angelenkt ist, in der Arbeitsstellung der Schutzvorrichtung (7) mit aufrecht stehendem Pralltuch (8) zwischen der ersten Schwenkachse (20) und der dritten Schwenkachse (22) auf zumindest näherungsweise demselben Höhenniveau wie die ersten und dritten Schwenkachsen (20, 22) angeordnet ist.

10. Landwirtschaftliches Anbaugerät nach einem der vorhergehenden Ansprüche, wobei mehrere zweite Lenker (15) drehfest an einer gemeinsamen Betätigungswelle (26) befestigt sind, die sich koaxial zur genannten zweiten Schwenkachse (21) erstreckt.

11. Landwirtschaftliches Anbaugerät nach einem der vorhergehenden Ansprüche, wobei ein die Prallfläche (8) tragender Schutzvorrichtungsträger (9) mit gegenüberliegenden Endabschnitten an zwei ersten Lenkern (14) der ersten Lenkeranordnung (10) schwenkbar gelagert ist, wobei an den Schutzvorrichtungsträger (9) zumindest ein quer zur ersten Schwenkachse (20) auskragender Anlenkhebel (27) drehfest befestigt und gelenkig mit zumindest einem zweiten Lenker (15) der zweiten Lenkeranordnung (11) verbunden ist, wobei der zumindest eine Anlenkhebel (27) vorzugsweise von dem Schutzvorrichtungsträger (9) quer zur Prallfläche (8) absteht und/oder zumindest näherungsweise senkrecht zur Prallfläche (8) angeordnet ist.

12. Landwirtschaftliches Anbaugerät nach einem der vorhergehenden Ansprüche, wobei die Prallfläche (8) in der Arbeitsstellung der Schutzvorrichtung (7) frontseitig vor dem oder heckseitig hinter dem zumindest einen Arbeitsaggregat (5) aufrecht stehend angeordnet ist und sich in der verschwenkten Montagestellung liegend oberhalb des Arbeitsaggregats (5) erstreckt.

13. Landwirtschaftliches Anbaugerät nach einem der vorhergehenden Ansprüche, wobei die Prallfläche (8) drehfest oder schwenkstabil an dem Schutzvorrichtungsträger (9) befestigt ist.

14. Landwirtschaftliches Anbaugerät nach einem der vorhergehenden Ansprüche, wobei die Prallfläche (8) ein an sich biegsames und/oder biegeschlaffes Pralltuch umfasst, dass mittels zumindest einer Versteifungsstrebe ausgesteift und drehfest am Schutzvorrichtungsträger (9) gehalten ist.

15. Landwirtschaftliches Anbaugerät nach einem der vorhergehenden Ansprüche, welches ein Frontmähwerk und/oder ein Heckmähwerk umfasst, an dem die genannte Schutzvorrichtung (7) angebracht ist.

## Claims

1. Agricultural cultivation device, in particular mowing machine, comprising an attachment device (2) for attachment to a tractor, at least one working unit (2), and a protection device (7) which comprises an impact surface (8), in particular in the form of a protective screen, that surrounds the working unit (5) in an upright manner, and which is mounted so as to be displaceable along a horizontal path (19) by means of a first linkage arrangement (10), **characterised in that** the protection device (7) is mounted on the first linkage arrangement (10) so as to be pivotable about a horizontal pivot pin (20) and is hinged to a second linkage arrangement (11) which tilts the protection device (7), during displacement along the horizontal path (19) specified by the first linkage arrangement (10), about the horizontal pivot pin (20), and twists the impact surface (8) out of the upright working position into a horizontal mounting position, and vice versa.

2. Agricultural cultivation device according to the preceding claim, wherein a displacement movement of the protection device (7) by means of the first linkage arrangement (10) leads to tilting of the second linkage arrangement (11) downwards, such that the impact surface (8) is tilted contrary to the displacement movement of the protection device (7), specifically in that in the case of a displacement of the protection device (7) towards the at least one working unit (5) the impact surface (8) is pivoted up, away from the working unit (5), and, vice versa, in the case of displacement of the protection device (7) away from the working unit (5) the impact surface (8) is tilted towards the working unit (5).

3. Agricultural cultivation device according to claim 1, wherein a displacement movement of the protection device (7) by means of the first linkage arrangement (10) leads to pivoting of the second linkage arrangement (11) upwards, such that the impact surface (8) is tilted in the same direction as the displacement of the protection device (7), specifically that in the case of displacement of the protection device (7) towards the at least one working unit (5) the impact surface (8) is also tilted towards the working unit (5) and, vice versa, in the case of displacement of the protection device (7) away from the working unit (5) the impact surface (8) is also tilted away from the working unit (5).

4. Agricultural cultivation device according to any of the preceding claims, wherein the first linkage arrangement (10) comprises at least one first linkage (14) which is hingedly mounted on one side to a machine frame (6) and is hingedly connected on the other side to the protection device (7) and specifies the horizontal path (19) for displacing the protection device (7) in the form of a horizontal circular arc section.

5. Agricultural cultivation device according to the preceding claim, wherein the at least one first linkage (14) is inclined in an acutely angled manner to opposing sides, relative to a vertical, in two end positions which correspond on the one hand to the working position of the protection device (7) and on the other hand to the mounting position of the protection device (7), and is oriented vertically in a central position during displacement of the protection device (7) between the working and mounting position, such that the horizontal path in the form of the circular arc section comprises slope portions that rise and fall towards the end positions, and a central portion having a horizontal tangent.

6. Agricultural cultivation device according to the preceding claim, wherein the mentioned first linkage (14) is hinged with a lower end to the machine frame (6) and is hinged with an upper end to the protection device (7), such that the horizontal path in the form of the circular arc section first rises out of the end position corresponding to the working position, as far as the central portion with horizontal tangent, and then drops again to the further end position corresponding to the mounting position, such that the protection device is initially lifted slightly and then lowered again slightly during movement out of the working position into the mounting position.

7. Agricultural cultivation device according to any of the preceding claims, wherein the horizontal pivot pin (20), about which the protection device (7) is pivotable is pivotable on the first linkage arrangement (10), is arranged in the region of an upper end of the impact surface (8) which is upright in the working position.

8. Agricultural cultivation device according to any of the preceding claims, wherein the second linkage arrangement (11) comprises at least one second linkage (15) which is mounted so as to be pivotable about a second horizontal pivot pin (21) and is connected to the protection device (7) so as to be pivotable about a third horizontal pivot pin (22), wherein the first, second and third pivot pins (20, 21, 22) are arranged so as to be oriented in parallel with one another and spaced apart from one another, wherein the second linkage (15) is preferably mounted with the second pivot pin (21) on the machine frame (6) and the second pivot pin (21) has a fixed position on the machine frame (6).

9. Agricultural cultivation device according to the preceding claim, wherein the first pivot pin (20) and the second pivot pin (21) are arranged at least approximately at the same height level above the at least one working unit (5), wherein preferably the second pivot pin (21), with which the second linkage (15) is hinged to the protection device (7), is arranged, in the working position of the protection device (7) with an upright impact screen (8), between the first pivot pin (20) and the third pivot pin (22) at at least approximately the same height level as the first and third pivot pins (20, 22).

10. Agricultural cultivation device according to any of the preceding claims, wherein a plurality of second linkages (15) are fixed to a common actuating shaft (26) in a rotationally fixed manner, which shaft extends coaxially to the mentioned second pivot axis (21).

11. Agricultural cultivation device according to any of the preceding claims, wherein a protection device support (9) supporting the impact surface (8) is pivotably mounted with opposing end portions on two first linkages (14) of the first linkage arrangement (10), wherein at least one articulation lever (27), projecting transversely to the first pivot pin (20), is fixed to the protection device support (9) in a rotationally fixed manner and is hingedly connected to at least one second linkage (15) of the second linkage arrangement (11), wherein the at least one articulation lever (27) preferably protrudes from the protection device support (9) transversely to the impact surface (8) and/or is arranged at least approximately perpendicularly to the impact surface (8).

12. Agricultural cultivation device according to any of the preceding claims, wherein the impact surface (8) is arranged upright, on the front side in front of or on the rear side behind the at least one working unit (5), in the working position of the protection device (7), and extends horizontally above the working unit (5) in the tilted mounting position.

13. Agricultural cultivation device according to any of the preceding claims, wherein the impact surface (8) is fixed to the protection device support (9) in a rotationally fixed or pivotally stable manner.

14. Agricultural cultivation device according to any of the preceding claims, wherein the impact surface (8) comprises an inherently flexible and/or non-rigid impact screen which is reinforced by means of at least one reinforcing strut and is held on the protection device support (9) in a rotationally fixed manner.

15. Agricultural cultivation device according to any of the preceding claims, comprising a front mower and/or a rear mower, to which the mentioned protection device (7) is attached.

## Revendications

1. Accessoire agricole rapporté, en particulier faucheuse, avec un dispositif rapporté (2) destiné à être rapporté sur un tracteur, au moins une unité de travail (5) ainsi qu'un dispositif de protection (7), qui présente une surface d'impact (8) entourant à la verticale l'unité de travail (5), en particulier sous la forme d'une toile de protection et qui est monté de manière à pouvoir coulisser le long d'une trajectoire (19) horizontale au moyen d'un premier ensemble de bielles (10), **caractérisé en ce que** le dispositif de protection (7) est monté de manière à pouvoir pivoter autour d'un axe de pivotement horizontal (20) sur le premier ensemble de bielles (10) et est articulé sur un deuxième ensemble de bielles (11), qui fait pivoter le dispositif de protection (7) autour de l'axe de pivotement horizontal (20) lors du coulissement le long de la trajectoire (19) horizontale prédéfinie par le premier ensemble de bielles (10) et fait tourner la surface d'impact (8) depuis la position de travail verticale dans une position de montage horizontale et inversement.

2. Accessoire agricole rapporté selon la revendication précédente, dans lequel un déplacement par coulissement du dispositif de protection (7) mène vers le bas pour pivoter le deuxième ensemble de bielles (11) au moyen du premier ensemble de bielles (10) de telle sorte que la surface d'impact (8) est pivotée en sens inverse au déplacement par coulissement du dispositif de protection (7), à savoir que lors du coulissement du dispositif de protection (7) en direction de l'au moins une unité de travail (5), la surface d'impact (8) est déployée par pivotement tout en s'éloignant de l'unité de travail (5) et, inversement, lors du coulissement du dispositif de protection (7) tout en s'éloignant de l'unité de travail (5), la surface d'impact (8) est pivotée en direction de l'unité de travail (5).

3. Accessoire rapporté agricole selon la revendication 1, dans lequel un mouvement par coulissement du dispositif de protection (7) mène vers le haut pour pivoter le deuxième ensemble de bielles (11) au moyen du premier ensemble de bielles (10) de telle sorte que la surface d'impact (8) est pivotée dans le même sens que le coulissement du dispositif de protection (7), à savoir que lors du coulissement du dispositif de protection (7) en direction de l'au moins une unité de travail (5), la surface d'impact (8) est pivotée également vers l'unité de travail (5) et, à l'inverse, lors du coulissement du dispositif de protection (7) tout en s'éloignant de l'unité de travail (5), la surface d'impact (8) est pivotée tout en s'éloignant de l'unité de travail (5).

4. Accessoire agricole rapporté selon l'une quelconque des revendications précédentes, dans lequel le premier ensemble de bielles (10) présente au moins une première bielle (14), qui est montée d'une part de manière articulée sur un bâti d'engin (6) et est reliée d'autre part de manière articulée au dispositif de protection (7), et spécifie la trajectoire horizontale (19) pour coulisser le dispositif de protection (7) sous la forme d'une pièce en arc de cercle horizontale.

5. Accessoire agricole rapporté selon la revendication précédente, dans lequel l'au moins une première bielle (14) est inclinée selon un angle aigu en direction de côtés opposés par rapport à une verticale dans deux positions finales, qui correspondent d'une part à la position de travail du dispositif de protection (7) et d'autre part à la position de montage du dispositif de protection (7), et est orientée verticalement dans une position centrale lors du déplacement du dispositif de protection (7) entre une position de travail et une position de montage de telle manière que la trajectoire horizontale sous la forme d'une pièce en arc de cercle présente des sections de pente montantes et descendantes en direction des positions finales et une section centrale avec une tangente horizontale.

6. Accessoire agricole rapporté selon la revendication précédente, dans lequel ladite première bielle (14) est articulée par une extrémité inférieure sur le bâti d'engin (6) et par une extrémité supérieure sur le dispositif de protection (7) de telle sorte que la trajectoire horizontale sous la forme de la pièce en arc de cercle monte depuis la position finale correspondant à la position de travail d'abord jusqu'à la section centrale avec une tangente horizontale puis redescend vers l'autre position finale correspondant à la position de montage de telle sorte que le dispositif de protection est d'abord légèrement soulevé puis est à nouveau légèrement abaissé lorsqu'il est amené depuis la position de travail dans la position de montage.

7. Accessoire agricole rapporté selon l'une quelconque des revendications précédentes, dans lequel l'axe de pivotement horizontal (20), autour duquel le dispositif de protection (7) peut être pivoté de manière à pouvoir pivoter sur le premier ensemble de bielles (10), est disposé dans la zone d'une extrémité supérieure de la surface d'impact (8) verticale dans la position de travail.

8. Accessoire agricole rapporté selon l'une quelconque des revendications précédentes, dans lequel le deuxième ensemble de bielles (11) présente une deuxième bielle (15), qui est montée de manière à pouvoir pivoter autour d'un deuxième axe de pivotement horizontal (21) et est reliée au dispositif de protection (7) de manière à pouvoir pivoter autour d'un troisième axe de pivotement horizontal (22), dans lequel les premier, deuxième et troisième axes de pivotement (20, 21, 22) sont orientés parallèlement les uns par rapport aux autres et sont disposés de manière espacée les uns des autres, dans lequel de préférence la deuxième bielle (15) est montée sur le bâti d'engin (6) avec le deuxième axe de pivotement (21) et le deuxième axe de pivotement (21) possède une position fixe sur le bâti d'engin (6).

9. Accessoire agricole rapporté selon la revendication précédente, dans lequel le premier axe de pivotement (20) et le deuxième axe de pivotement (21) sont disposés au moins approximativement sur le même niveau en hauteur au-dessus de l'au moins une unité de travail (5), dans lequel de préférence le deuxième axe de pivotement (21), avec lequel la deuxième bielle (15) est articulée sur le dispositif de protection (7), est disposé sur au moins approximativement sur le même niveau en hauteur que les premier et troisième axes de pivotement (20, 22) dans la position de travail du dispositif de protection (7) avec une toile d'impact (8) située à la verticale entre le premier axe de pivotement (20) et le troisième axe de pivotement (22).

10. Accessoire agricole rapporté selon l'une quelconque des revendications précédentes, dans lequel plusieurs deuxièmes bielles (15) sont fixées de manière solidaire en rotation sur un arbre d'actionnement (26) commun, qui s'étend coaxialement par rapport audit deuxième axe de pivotement (21).

11. Accessoire agricole rapporté selon l'une quelconque des revendications précédentes, dans lequel un support de dispositif de protection (9) supportant la surface d'impact (8) est monté de manière à pouvoir pivoter par des sections d'extrémité opposées sur deux premières bielles (14) du premier ensemble de bielles (10), dans lequel au moins un levier d'articulation (27) en porte-à-faux transversalement par rapport au premier axe de pivotement (20) est fixé de manière solidaire en rotation et est relié de manière articulée à au moins une deuxième bielle (15) du deuxième ensemble de bielles (11) sur le support de dispositif de protection (9), dans lequel l'au moins un levier d'articulation (27) dépasse de préférence du support de dispositif de protection (9) transversalement par rapport à la surface d'impact (8) et/ou est disposé au moins approximativement perpendiculairement à la surface d'impact (8).

12. Accessoire agricole rapporté selon l'une des revendications précédentes, dans lequel la surface d'impact (8) dans la position de travail du dispositif de protection (7) est disposée verticalement côté avant devant l'au moins une unité de travail (5) ou côté arrière derrière celle-ci et s'étend au-dessus de l'unité de travail (5) lorsqu'elle se trouve dans la position de montage pivotée.

13. Accessoire agricole rapporté selon l'une quelconque des revendications précédentes, dans lequel la surface d'impact (8) est fixée de manière solidaire en rotation ou de manière stable en pivotement sur le support de dispositif de protection (9).

14. Accessoire agricole rapporté selon l'une quelconque des revendications précédentes, dans lequel la surface d'impact (8) comprend une toile d'impact en soi flexible et/ou souple en flexion, qui est rigidifiée au moyen d'au moins une entretoise de rigidification et est maintenue de manière solidaire en rotation sur le support de dispositif de protection (9).

15. Accessoire agricole rapporté selon l'une quelconque des revendications précédentes, qui comprend un mécanisme de fauchage frontal et/ou un mécanisme de fauchage arrière, sur lequel ledit dispositif de protection (7) est installé.
